# EUROPÄISCHE PATENTSCHRIFT

(11) **EP 0 668 845 B1**
(45) Veröffentlichungstag und Bekanntmachung des Hinweises auf die Patenterteilung: **02.05.1997**
(21) Anmeldenummer: 94901785.9
(22) Anmeldetag: 10.11.1993
(51) Int. Cl.: C01D 17/00

(54) **VERFAHREN ZUR HERSTELLUNG EINER HOCHDICHTEN CÄSIUM- UND RUBIDIUMSALZLÖSUNG**
PROCESS FOR PRODUCING A HIGH-DENSITY CAESIUM AND RUBIDIUM SALT SOLUTION
PROCEDE DE PREPARATION D'UNE SOLUTION SALINE DE CESIUM ET DE RUBIDIUM A DENSITE ELEVEE

(30) Priorität: 11.11.1992 DE 4237954
(43) Veröffentlichungstag der Anmeldung: 30.08.1995
(73) Patentinhaber: METALLGESELLSCHAFT AKTIENGESELLSCHAFT, 60323 Frankfurt am Main (DE)
(72) Erfinder: PRINZ, Horst, D-86316 Friedberg (DE); HOFMANN, Hartmut, D-65812 Bad Soden (DE); KÖBELE, Klaus, D-63128 Dietzenbach (DE); WEGNER, Marion, D-60528 Frankfurt am Main (DE)
(86) Internationale Anmeldenummer: EP9303143
(87) Internationale Veröffentlichungsnummer: WO9411303

(56) Entgegenhaltungen:
- FR-A- 2 588 847
- US-A- 3 207 571
- US-A- 3 489 509
- CHEMICAL ABSTRACTS, Band 73, Nr. 16, 19 Oktober 1970, Columbus, OH (US); E.B. PANASENKO et al., Seite 105, Nr. 79009y
- CHEMICAL ABSTRACTS, Band 79, Nr. 1, 09 Juli 1973, Columbus, OH (US); SHIPILOVA et al., Seite 422, Nr. 4949v
- CHEMICAL ABSTRACTS, Band 100, Nr. 20, 14 Mai 1984, Columbus, OH (US); Y. NAKAMICHI et al., Seite 214, Nr. 160074p
- TSVETNYE METALLURGY. THE SOVIET JOURNAL OF NON-FERROUS METALS, Band 2, Nr. 5, 1961; GOROSHCHENKO et al., Seiten 57-59

## Beschreibung

Die Erfindung betrifft ein Verfahren zur Herstellung einer hochdichten Cäsium- und Rubidiumsalzlösung, d.h. einer Lösung mit einer Dichte von 1,6 bis 3,3 g/cm³, durch hydrothermalen Aufschluß von cäsium- und rubidiumhaltigen Mineralien.

Aus der Zeitschrift "Tsvetnye Metally - The Soviet Journal of Non-Ferrous Metals", Band II, Nr. 5, S. 57-59 (1961) ist eine Methode zum hydrothermalen Aufschluß eines Pollucit-Spodumen-Konzentrates zur Gewinnung von Cäsiumcarbonat bekannt. Die kalzinierten Mineralien werden dabei einem hydrothermalen Aufschluß mit einer wäßrigen Ca(OH)₂-Lösung bei 220°C und 20 atm Druck über einen Zeitraum von 4 Stunden unterzogen, wobei optimale Aufschlußbedingungen bei 3 Mol Ca(OH)₂ je Mol SiO₂ erzielt werden. Es ließen sich 88,3 % des im Mineral enthaltenen Cäsiums gewinnen und durch Umkristallisation des Alumo-Cäsium-Alauns ein Cäsium-Salz mit einer Reinheit > 99 % herstellen. Weiterhin ist aus dem Chemical-Abstracts-Referat 79/4949v (1973) eine Methode zur Umwandlung von Cs₂CO₃ in CsHCO₂ bekannt, wobei das Carbonat mit Ameisensäure in Wasser reagiert.

Aufgabe der Erfindung ist es, ein Verfahren anzugeben, das die kostengünstige Herstellung einer hochdichten Cäsium- und Rubidiumsalzlösung, d.h. einer Lösung mit einer Dichte von 1,6 bis 3,3 g/cm³, bei einem hohen Ausnutzungsgrad der in den eingesetzten Mineralien enthaltenen Cäsium- und Rubidium-Gehalte erlaubt.

Erfindungsgemäß wird die Aufgabe dadurch gelöst, daß bis zu einer Korngröße < 0,1 mm aufgemahlener unkalzinierter Pollucit und/oder kalzinierter Lepidolith in den Aufschluß eingesetzt werden, wobei die Suspensionsdichte im Bereich von 4 bis 15 Gew.% liegt, anschließend die unlöslichen Feststoffe abfiltriert und gewaschen, Calcium- sowie Lithium-Ionen durch Begasung mit Kohlendioxid und Abfiltration der ausgefallenen Carbonate aus dem Filtrat des Aufschlusses entfernt, die verbliebene Lösung eingeengt und die Salze des Cäsiums und Rubidiums durch Zugabe einer Säure oder eines Säureanhydrids bis zu einem pH-Wert von ca. 6 gebildet werden, wobei das nach dem Aufschluß abgetrennte Filtrat mehrfach beim hydrothermalen Aufschluß eingesetzt wird. Die Suspensionsdichte ist als Konzentration des Pollucits oder des Lepidoliths sowie des ungelösten CaO bzw. Ca(OH)₂ in Wasser definiert.

Überraschenderweise lassen sich aus dem unkalzinierten Pollucit und/oder dem kalzinierten Lepidolith, die bis zu einer Korngröße von < 0,1 mm aufgemahlen werden, durch hydrothermalen Aufschluß mit Ca(OH)₂ bei einer Temperatur von 200 bis 230 °C und einer Suspensionsdichte von 4 bis 15 Gew.% im Zeitraum von einer bis drei Stunden mehr als 80 Gew.% des im Mineral enthaltenen Cäsiums und Rubidiums gewinnen und kostengünstig in eine hochdichte Cäsium- und Rubidiumsalzlösung umwandeln, wenn das nach der Abtrennung der unlöslichen Feststoffe anfallende Filtrat mindestens 3-fach beim hydrothermalen Aufschluß eingesetzt wird.

Das erfindungsgemäße Verfahren hat den Vorteil, daß durch den mehrfachen Einsatz des Filtrates beim hydrothermalen Aufschluß eine Lösung mit einem mindestens 3-fach höheren Gehalt von Cäsium- und Rubidiumhydroxid erhalten wird, die zur Herstellung der hochdichten Cäsium- und Rubidiumsalzlösung, d.h. einer Lösung mit einer Dichte von 1,6 bis 3,3 g/cm³, weniger eingeengt werden muß und damit kostengünstiger hergestellt werden kann.

Die weitere, vorteilhafte Ausgestaltung des Verfahrens erfolgt in der Weise, wie sie in den Ansprüchen 2 bis 5 dargelegt ist.

Nach der Erfindung erfolgt die Rührung während des Aufschlusses in der Weise, daß sowohl Sedimentation als auch Flotation durch Gaseintrag in die Suspension verhindert werden. Dies kann entweder durch eine intervallmäßige Drehrichtungsänderung des Rührers oder durch einen zeitlich intervallmäßigen Betrieb des Rührers während des Aufschlusses erreicht werden.

In vorteilhafter Weise werden die Cäsium- und Rubidiumsalzlösungen erhalten, indem man zur Neutralisation der nach der Abtrennung von Calcium sowie Lithium verbleibenden Aufschlußlösung als Säuren Ameisensäure, Essigsäure, Zitronensäure, Chlorwasserstoffsäure, Bromwasserstoffsäure oder Schwefelsäure oder die Säureanhydride Kohlenmonoxid, Molybdäntrioxid oder Wolframtrioxid verwendet.

Besonders vorteilhaft für die Herstellung einer hochdichten Cäsium- und Rubidiumsalzlösung ist, daß das nach dem hydrothermalen Aufschluß abgetrennte Filtrat bis zu 6 mal bei weiteren Aufschlußansätzen eingesetzt wird. Weiterhin erweist es sich für das Gesamtverfahren als vorteilhaft, die abgetrennten Carbonate zur Lithium-Herstellung und den nach dem hydrothermalen Aufschluß zurückbleibenden unlöslichen Feststoff als Zuschlagstoff zu Zementrohmehlen zu verwenden. Dadurch wird das vorgeschlagene Verfahren nahezu abproduktfrei.

Die Dichte der gesättigten Cäsium- und Rubidiumsalzlösung ist über weite Bereiche dadurch variierbar, daß man gesättigte Lösungen eines Alkali- oder Erdalkalisalzes zumischt, wobei die Anionen beider Salzlösungen gleich sind.

In vorteilhafter Weise werden die verfahrensgemäß hergestellten, gesättigten Cäsium- und Rubidiumformiatlösungen mit gesättigten Kaliumformiatlösungen zur Einstellung einer Dichte von 1,6 bis 2,26 g/ml gemischt, und verfahrensgemäß hergestellte, gesättigte Cäsium- und Rubidiumbromidlösungen werden mit gesättigten Calciumbromidlösungen zu Salzlösungen mit Dichten zwischen 1,68 und 1,81 g/ml gemischt.

Die Erfindung soll anhand der nachfolgenden Beispiele näher erläutert werden.

| Versuchsmaterial | | |
|---|---|---|
| Gehalt an | Pollucit Original % | Lepidolith kalziniert bei 800°C % |
| Cs | 23,5 | 0,56 |
| Rb | 0,97 | 3,3 |
| Al | 8,9 | 15,2 |
| Na | 1,07 | 0,24 |
| K | 1,09 | 7,2 |
| Li | 0,30 | 1,31 |
| Ca | 0,08 | n.b. * |
| SiO₂ | 51,6 | 52,3 |

| | | |
|---|---|---|
| * n.b. = nicht bestimmt | | |

Die nachfolgenden Versuche wurden mit dem unkalzinierten Pollucit und dem kalzinierten Lepidolith durchgeführt.

### Beispiel 1

In einem 300 1 fassenden Autoklav, ausgestattet mit einem Rührer und beheizt über einen Doppelmantel mit Hochtemperatur-Heizöl, wobei die Temperaturmessung über ein Thermoelement und die Druckmessung über ein Manometer erfolgte, wurden 8,92 kg Pollucit (Korngröße < 0,08 mm), 11,34 kg Ca(OH)₂ und 232,5 kg Wasser (entspricht einer 8 Gew.%igen Suspension) für einen hydrothermalen Aufschluß eingesetzt. Nach dem Aufheizen auf Solltemperatur von 230°C wurde 3 h bei dieser Temperatur gehalten. Während dieser Zeit ist das Reaktionsgemisch in Intervallen gerührt (Rühren 1 min, Ruhezeit 15 min) worden. Nach Ende der Reaktion wurde auf Raumtemperatur abgekühlt. Die Filtration der Suspension erfolgte bei ansteigendem Druck bis 5 bar über ein Druckfilter. Der Filterkuchen wurde gewaschen. Insgesamt sind 251,8 kg Filtrat und Waschwasser gewonnen worden.

Ein weiterer Ansatz wurde identisch zum ersten durchgeführt, bei dem 286,9 kg Filtrat und Waschwasser anfielen.

Die Lösungen von beiden Ansätzen wurden vereinigt und analysiert.

| Inhalt an kg | | Ausbringen % |
|---|---|---|
| Cs | 4,158 | 99,2 |
| Rb | 0,167 | 96,4 |
| Na | 0,175 | 91,7 |
| K | 0,194 | 100 |
| Li | 0,011 | 19,9 |

Die aus Filtrat und Waschwasser bestehende klare Lösung wurde weitgehend eingedampft. Während der fortschreitenden Wasserverdampfung kam es zur Ausfällung von Feststoffen. Nach Abdampfung von 517 kg Wasser wurde in die verbliebene Suspension Kohlendioxid eingeblasen, um Calcium und Lithium als Carbonat zu fällen. Anschließend wurde über eine Filternutsche klar filtriert und 21,35 kg einer gelbbraungefärbten Lösung erhalten, die bei Raumtemperatur eine Dichte von 1,367 g/ml aufwies.

Zu dem Filtrat wurde Ameisensäure dosiert, bis ein pH-Wert von 6 erreicht war. Dafür sind 1,742 kg konzentrierte Ameisensäure (98 bis 100 Gew.%ig) benötigt worden. Anschließend wurde die Lösung weiter eingedampft. Zu Beginn stellte sich eine Siedetemperatur von 108°C ein, die mit fortschreitender Eindampfung anstieg.

Bei einer Siedetemperatur von 118,6°C wurde eine Lösungsprobe entnommen, abgekühlt und die Dichte zu 1,769 g/ml (Raumtemperatur) bestimmt. Folgende weitere Siedetemperaturen und Dichten wurden ermittelt:

| Siedetemperatur °C | Dichte bei 20°C g/ml |
|---|---|
| 118,6 | 1,769 |
| 127,0 | 1,960 |
| 145,3 | 2,261 |
| 146,2 | 2,270 |
| 147,0 | 2,274 |

Es konnten 8 kg Cäsium- und Rubidiumsalzlösung mit einer Dichte von 2,27 g/ml erhalten werden. Nach der Analyse liegen darin folgende Inhaltsstoffe vor:

| | |
|---|---|
| Cs | 52,0 % |
| Rb | 2,08 % |
| Na | 2,19 % |
| K | 2,43 % |
| | |
| Ca | 32 g/t |
| Mg | < 5 g/t |

### Beispiel 2

Der hydrothermale Aufschluß wurde gemäß Beispiel 1 durchgeführt mit dem Unterschied, daß der Pollucit < 0,04 mm aufgemahlen wurde und der hydrothermale Aufschluß bei 200°C erfolgte. Das Ergebnis ist in Tabelle 1 zusammengefaßt.

### Beispiel 3

Der hydrothermale Aufschluß wurde gemäß Beispiel 1 durchgeführt mit dem Unterschied, daß der Pollucit < 0,1 mm aufgemahlen wurde und der hydrothermale Aufschluß bei 280°C erfolgte. Das Ergebnis ist in Tabelle 2 zusammengefaßt.

### Beispiel 4

Der hydrothermale Aufschluß wurde gemäß Beispiel 1 im 2 l Autoklav durchgeführt mit dem Unterschied, daß die Suspensionsdichte auf 15 Gew.% eingestellt worden ist. Das Ergebnis ist in Tabelle 3 zusammengefaßt.

### Beispiel 5

Der hydrothermale Aufschluß wurde gemäß Beispiel 1 im 2 1 Autoklav durchgeführt mit dem Unterschied, daß kalzinierter Lepidolith (800°C) als Rohstoff eingesetzt und der hydrothermale Aufschluß bei folgenden Bedingungen durchgeführt wurde:
- Aufmahlung < 0,1 mm
- SiO₂ : CaO 1:3

Das Ergebnis ist in Tabelle 4 zusammengefaßt.

### Beispiel 6

Der in den Beispielen 1 bis 5 demonstrierte einmalige Aufschluß von unkalziniertem Pollucit oder kalziniertem Lepidolith wird durch das erfindungsgemäße Verfahren ersetzt.

Der hydrothermale Aufschluß wurde gemäß Beispiel 1 in einem 2 1 Autoklav durchgeführt mit dem Unterschied, daß ein mehrfacher Einsatz des Filtrats beim hydrothermalen Aufschluß erfolgte. Die Ergebnisse sind in Tabelle 5 zusammengefaßt.

In der Tabelle 5 bedeuten die Spalten 2 und 3 die Menge des Cäsiums und Rubidiums im jeweils frisch eingesetzten Mineral. Spalte 4 gibt die Menge des Filtrats an, das beim nächsten Aufschlußansatz zum Einsatz kam. Den Spalten 5 bis 8 sind die relativen und absoluten Mengen an Cäsium und Rubidium zu entnehmen, die sich im Filtrat anreichern. Die Spalten 9 und 10 enthalten die prozentualen Anteile an Cäsium und Rubidium, die beim jeweiligen Aufschlußansatz von der Menge im eingesetzten Mineral gewonnen werden.

### Beispiel 7

Eine hochdichte cäsium- und rubidiumhaltige Salzlösung wird hergestellt, indem man eine gemäß Beispiel 6 erhaltene cäsium- und rubidiumhaltige Hydroxidlösung (6,285 kg, 50 Gew.%ig) unter Zugabe von Wasserstoffperoxid (30 %ig) mit 2,277 kg Wolframtrioxid umsetzt. Durch Erwärmung der Suspension bis zum Siedepunkt wird das gesamte Wolframtrioxid gelöst. Die Lösung wird bis zur beginnenden Kristallisation eingedampft, abgekühlt und ausgefallenes Kristallisat abgetrennt. Man erhält 6,085 kg einer Cäsium-, Rubidiumwolframatlösung mit einer Dichte von 2,95 g/ml bei 20°C.

### Beispiel 8

Gesättigte cäsium- und rubidiumhaltige Salzlösungen mit einer Dichte von 1,6 bis 2,26 g/ml werden erhalten, indem man die erfindungsgemäß hergestellte Cäsium-, Rubidiumformiatlösung gemäß Tabelle 6 mit gesättigter Kaliumformiatlösung mischt.

### Beispiel 9

Gesättigte cäsium- und rubidiumhaltige Salzlösungen mit einer Dichte von 1,68 bis 1,81 g/ml werden erhalten, indem man die erfindungsgemäß hergestellten Cäsium-, Rubidiumbromidlösungen gemäß Tabelle 7 mit gesättigter Calciumbromidlösung mischt.

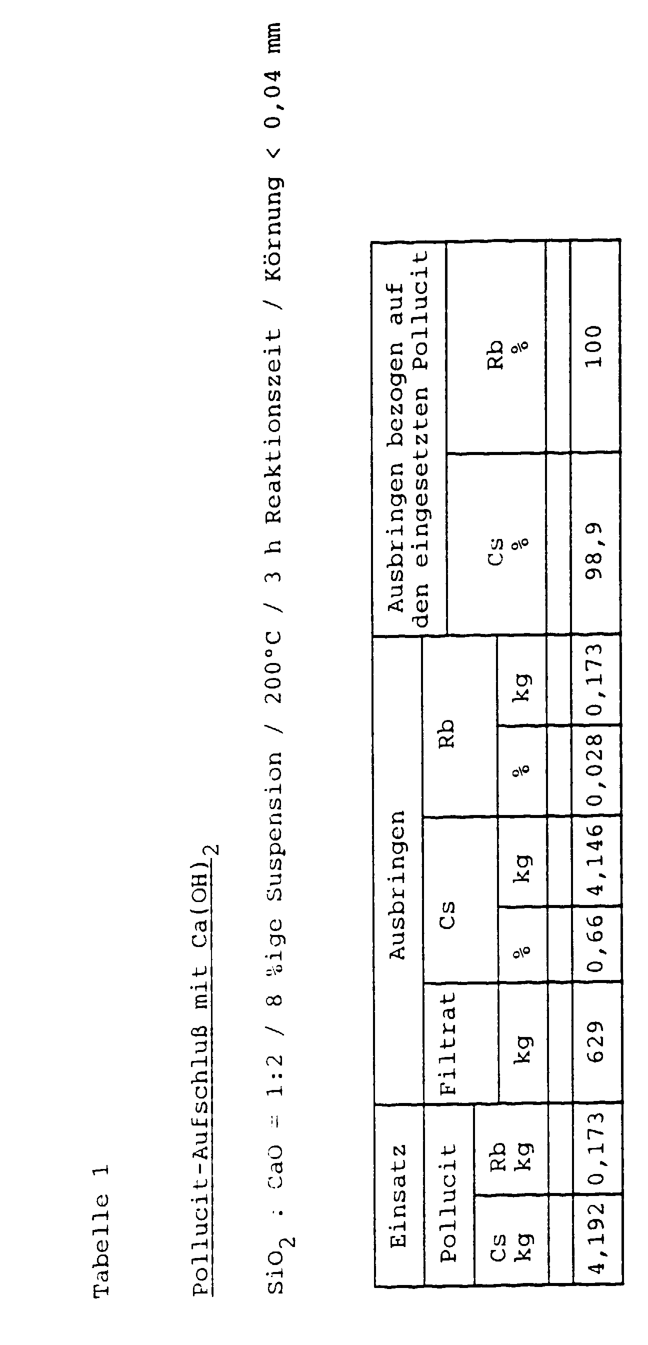

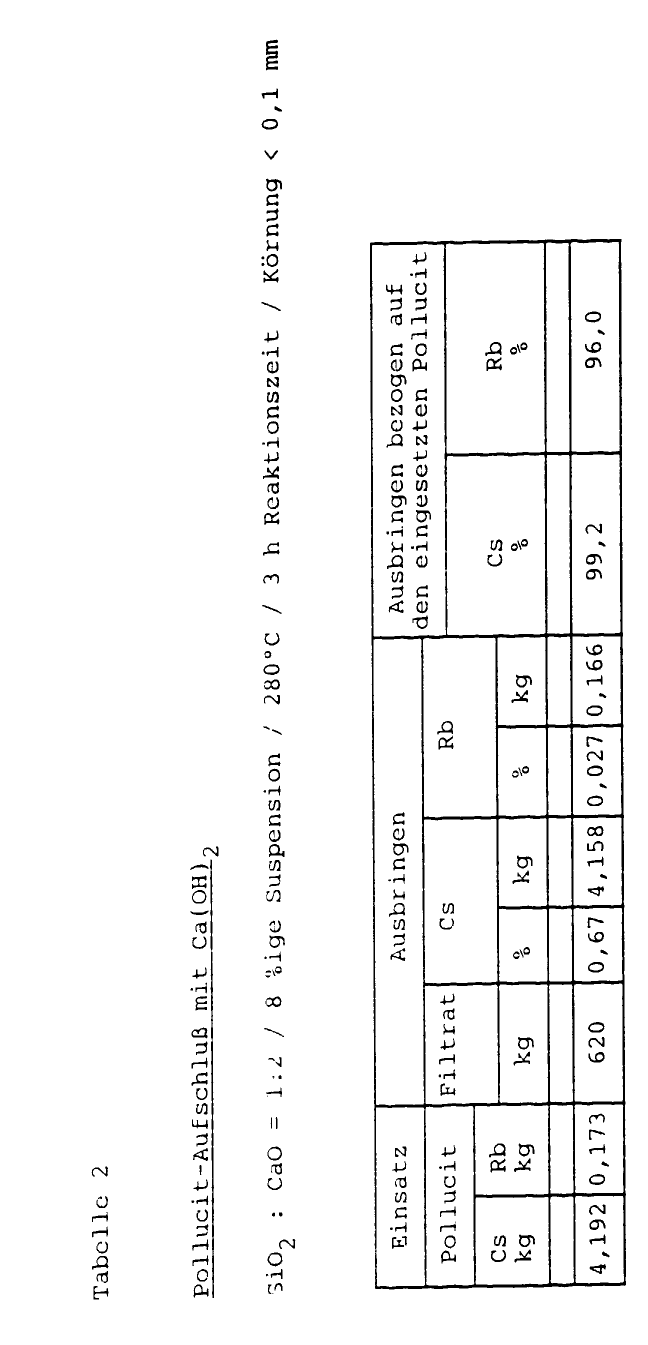

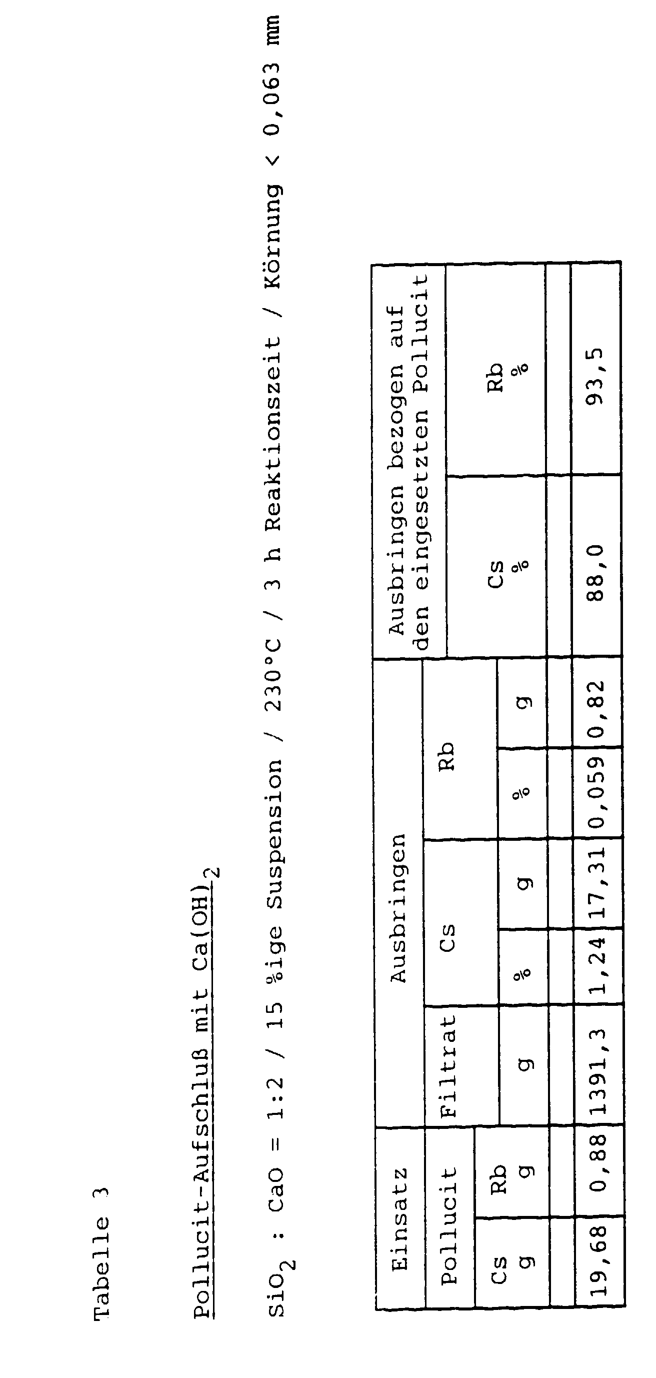

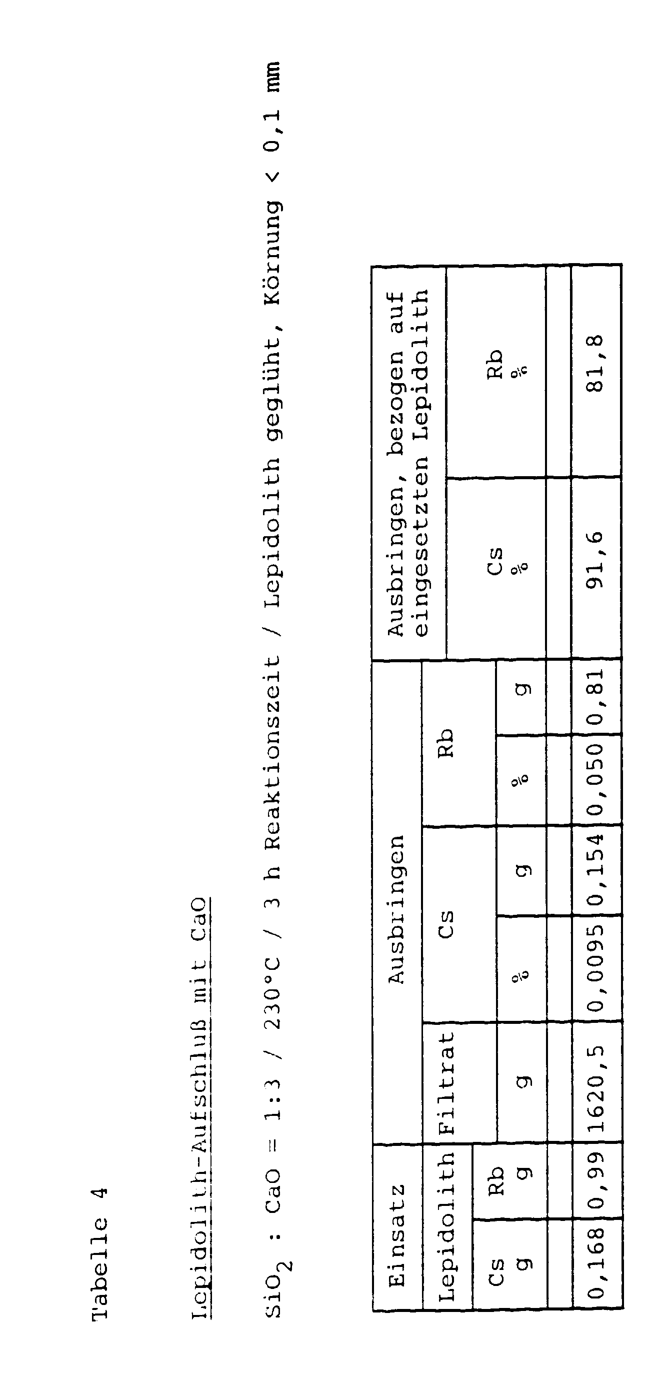

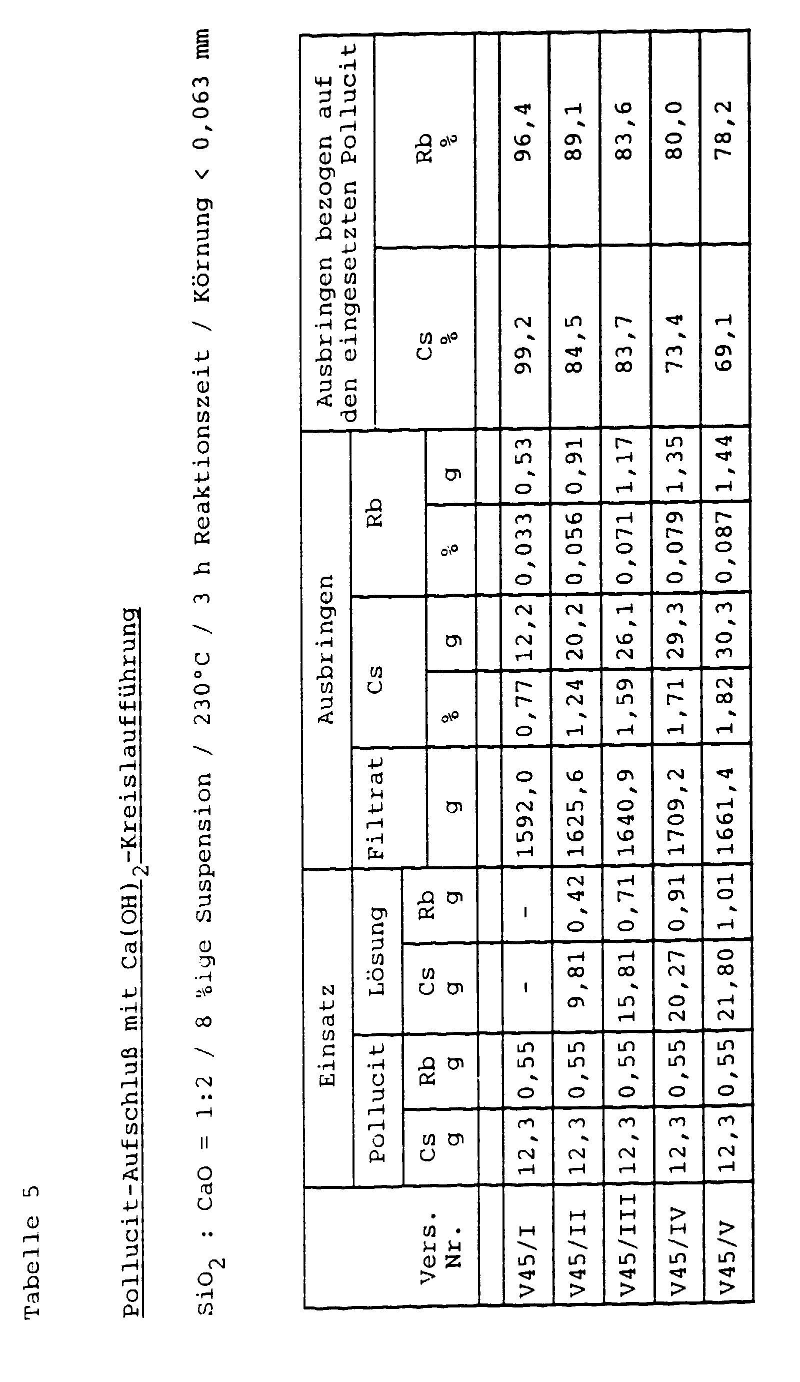

**Tabelle 6**

| Mischung einer gesättigten HCOOCs/Rb-Lösung, hergestellt aus Pollucit mit HCOOK-Lösung gesättigt bei 20°C | | |
|---|---|---|
| Vol.% HCOOCs/Rb : HCOOK | Gew.% HCOOCs/Rb : HCOOK | Dichte bei 20°C g/ml |
| 100 : - | 100 : - | 2,264 |
| 90 : 10 | 92,9 : 7,1 | 2,194 |
| 80 : 20 | 85,2 : 14,8 | 2,125 |
| 70 : 30 | 77,1 : 22,9 | 2,055 |
| 60 : 40 | 68,4 : 31,6 | 1,986 |
| 50 : 50 | 59,1 : 40,9 | 1,916 |
| 40 : 60 | 49,0 : 51,0 | 1,846 |
| 30 : 70 | 38,2 : 61,8 | 1,777 |
| 20 : 80 | 26,5 : 73,5 | 1,707 |
| 10 : 90 | 13,8 : 86,2 | 1,638 |
| - : 100 | - : 100 | 1,568 |

**Tabelle 7**

| Mischung einer gesättigten Cs/RbBr-Lösung mit gesättigter CaBr₂-Lösung | | |
|---|---|---|
| Vol.% Cs/RbBr : CaBr₂ | Gew.% Cs/RbBr : CaBr₂ | Dichte bei 20°C g/ml |
| 100 : - | 100 : - | 1,682 |
| 90 : 10 | 89,3 : 10,7 | 1,695 |
| 80 : 20 | 78,8 : 21,2 | 1,708 |
| 70 : 30 | 68,4 : 31,6 | 1,721 |
| 60 : 40 | 58,2 : 41,8 | 1,734 |
| 50 : 50 | 48,1 : 51,9 | 1,747 |
| 40 : 60 | 38,2 : 61,8 | 1,760 |
| 30 : 70 | 28,5 : 71,5 | 1,773 |
| 20 : 80 | 18,8 : 81,2 | 1,786 |
| 10 : 90 | 9,3 : 90,7 | 1,799 |
| - : 100 | - : 100 | 1,812 |

## Patentansprüche

1. Verfahren zur Herstellung einer hochdichten Cäsium- und Rubidiumsalzlösung durch hydrothermalen Aufschluß von Cäsium- und Rubidium-haitigen Mineralien mit Ca(OH)₂, welches in einem Mol-Verhältnis berechnet als SiO₂: CaO, von ≥ 1:2 eingesetzt wird, wobei der Aufschluß bei einer Aufschlußtemperatur von 200 bis 280°C und einem Druck von 20 bis 40 bar über einen Zeitraum von 1 bis 3 Stunden durchgeführt wird, wobei bis zu einer Korngröße <0,1 mm aufgemahlener unkaizinierter Pollucit und/oder kalzinierter Lepidolith in den Aufschluß eingesetzt werden und wobei die Suspensionsdichte der Aufschlußmischung im Bereich von 4 bis 15 Gew.-% liegt, anschließend die unlöslichen Feststoffe abfiltriert und gewaschen, Calcium- sowie Lithium-Ionen durch Begasung mit Kohlendioxid und Abfiltration der ausgefallenen Carbonate aus dem Filtrat des Aufschlusses entfernt, die verbliebene Lösung eingeengt und Salze des Cäsiums und Rubidiums durch Zugabe einer Säure oder eines Säureanhydrids bis zu einem pH-Wert von ca. 6 gebildet werden, wobei das nach dem Aufschluß abgetrennte Filtrat mehrfach beim hydrothermalen aufschluß eingesetzt wird.

2. Verfahren nach Anspruch 1, dadurch gekennzeichnet, daß der unkalzinierte Pollucit und/oder der kalzinierte Lepidolith bis zu einer Korngröße < 0,04 mm aufgemahlen wird.

3. Verfahren nach Anspruch 1 und/oder 2, dadurch gekennzeichnet, daß das cäsium- und rubidiumhaltige Mineral bei 200°C mit Ca(OH)₂ aufgeschlossen wird.

4. Verfahren nach einem oder mehreren der Ansprüche 1 bis 3, dadurch gekennzeichnet, daß das cäsium- und rubidiumhaltige Mineral über einen Zeitraum von einer Stunde aufgeschlossen wird.

5. Verfahren nach einem oder mehreren der Ansprüche 1 bis 4, dadurch gekennzeichnet, daß das cäsium- und rubidiumhaltige Mineral bei einer Suspensionsdichte von 15 Gew.% aufgeschlossen wird.

6. Verfahren nach den Ansprüchen 1 bis 5, dadurch gekennzeichnet, daß während des Aufschlusses eine Rührung erfolgt, wobei entweder eine intervallmäßige Drehrichtungsänderung des Rührers vorgenommen oder während des Aufschlusses in zeitlichen Intervallen gerührt wird.

7. Verfahren nach den Ansprüchen 1 bis 6, dadurch gekennzeichnet, daß als Säure Ameisensäure, Essigsäure, Zitronensäure, Salzsäure, Bromwasserstoffsäure, Schwefelsäure oder als Säureanhydrid Kohlenmonoxid, Molybdäntrioxid oder Wolframtrioxid verwendet wird.

8. Verfahren nach einem oder mehreren der Ansprüche 1 bis 7, dadurch gekennzeichnet, daß das nach dem Aufschluß abgetrennte Filtrat bis zu 6 mal bei weiteren hydrothermalen Aufschlußansätzen der cäsium- und rubidiumhaltigen Mineralien eingesetzt wird.

9. Verfahren nach einem oder mehreren der Ansprüche 1 bis 8, dadurch gekennzeichnet, daß die abgetrennten Carbonate zur Lithiumherstellung verwendet werden.

10. Verfahren nach einem oder mehreren der Ansprüche 1 bis 8, dadurch gekennzeichnet, daß die nach dem hydrothermalen Aufschluß unlöslichen Feststoffe als Zuschlagstoffe zu Zementrohmehlen verwendet werden.

11. Verfahren nach den Ansprüchen 1 bis 10, dadurch gekennzeichnet, daß die eingeengte, gesättigte Cäsium- und Rubidiumsalzlösung auf eine bestimmte Dichte durch Mischung mit der gesättigten Lösung eines Alkali- oder Erdalkalisalzes eingestellt wird, wobei die Anionen beider Salzlösungen gleich sind.

12. Verfahren nach Anspruch 11, dadurch gekennzeichnet, daß eine gesättigte Cäsium- und Rubidiumformiatlösung mit einer gesättigten Kaliumformiatlösung gemischt wird.

13. Verfahren nach Anspruch 11, dadurch gekennzeichnet, daß eine gesättigte Cäsium- und Rubidiumbromidlösung mit einer gesättigten Calciumbromidlösung gemischt wird.

## Revendications

1. Procédé de préparation d'une solution de sel de césium et de rubidium de haute densité par attaque hydrothermale de minéraux contenant du césium et du rubidium par du Ca(OH)₂, qui est utilisé dans un rapport molaire, exprimé en SiO₂:CaO, supérieur ou égal 1:2, l'attaque étant effectuée à une température d'attaque de 200 à 280 °C et sous une pression de 20 à 40 bar en une durée de 1 à 3 heures, en utilisant dans l'attaque de la pollucite non calcinée et/ou de la lépidolithe calcinée, broyée jusqu'à une grosseur de grains inférieure à 0,1 mm et la densité de la suspension du mélange de l'attaque étant dans le domaine de 4 à 15 % en poids, puis en séparant par filtration les substances solides insolubles et en les lavant, en éliminant du filtrat de l'attaque les ions calcium et lithium par traitement par du dioxyde de carbone et par séparation par filtration des carbonates qui ont précipité, en concentrant la solution restante et en formant les sels du césium et du rubidium par addition d'un acide ou d'un anhydride d'acide jusqu'à un pH d'environ 6, le filtrat séparé après l'attaque étant utilisé plusieurs fois dans l'attaque hydrothermale.

2. Procédé selon la revendication 1, caractérisé en ce que la pollucite non calcinée et/ou la lépidolithe calcinée est broyée à une grosseur de grains inférieure à 0,04 mm.

3. Procédé selon la revendication 1 et/ou 2, caractérisé en ce que le minéral contenant du césium et du rubidium est attaqué à 200 °C par Ca(OH)₂.

4. Procédé selon l'une ou plusieurs des revendications 1 à 3, caractérisé en ce que le minéral contenant du césium et du rubidium est attaqué en une durée d'une heure.

5. Procédé selon l'une ou plusieurs des revendications 1 à 4, caractérisé en ce que le minéral contenant du césium et du rubidium est attaqué à une densité de la suspension de 15 % en poids.

6. Procédé selon les revendications 1 à 5, caractérisé en ce que, pendant l'attaque, on effectue une agitation, soit en modifiant de temps à autre le sens du rotation de l'agitateur, soit en agitant à intervalles de temps pendant l'attaque.

7. Procédé selon les revendications 1 à 6, caractérisé en ce que l'on utilise comme acide l'acide formique, l'acide acétique, l'acide citrique, l'acide chlorhydrique, l'acide bromhydrique, l'acide sulfurique ou comme anhydride d'acide le monoxyde de carbone, le trioxyde de molybdène ou le trioxyde de tungstène.

8. Procédé selon l'une ou plusieurs des revendications 1 à 7, caractérisé en ce que l'on utilise le filtrat séparé après l'attaque jusqu'à six fois pour d'autres opérations d'attaque hydrothermale des minéraux contenant du césium et du rubidium.

9. Procédé selon une ou plusieurs des revendications 1 à 8, caractérisé en ce que les carbonates séparés sont utilisés pour la préparation du lithium.

10. Procédé selon une ou plusieurs des revendications 1 à 8, caractérisé en ce que les substances solides insolubles après l'attaque hydrothermale sont utilisées comme agrégats pour des farines crues de ciment.

11. Procédé selon les revendications 1 à 10, caractérisé en ce que la solution concentrée, saturée de sels de césium et de rubidium à une densité déterminée s'obtient, par mélange à la solution saturée d'un sel de métal alcalin ou alcalino-terreux, les anions des deux solutions salines étant identiques.

12. Procédé selon la revendication 11, caractérisé en ce qu'on mélange une solution saturée de formiate de césium et de rubidium à une solution saturée de formiate de potassium.

13. Procédé selon la revendication 11, caractérisé en ce qu'on mélange une solution saturée de bromure de césium et de rubidium à une solution saturée de bromure de calcium.

## Claims

1. A method for producing a high-density caesium and rubidium salt solution by hydrothermal decomposition of minerals containing caesium and rubidium with Ca(OH)₂, which is used in a molar ratio, calculated as SiO₂ : CaO, of ≥ 1:2, the decomposition being effected at a decomposition temperature of 200 to 280°C and a pressure of 20 to 40 bar over a period of 1 to 3 hours, with uncalcined pollucite and/or calcined lepidolite ground down to a grain size of < 0.1 mm being used in the decomposition and the suspension density of the decomposition mixture being in the range of 4 to 15% by weight, then the insoluble solids are filtered off and washed, calcium and lithium ions are removed from the filtrate of the decomposition process by gassing with carbon dioxide and filtering off the precipitated carbonates, the remaining solution is reduced and salts of caesium and rubidium are formed by the addition of an acid or an acid anhydride up to a pH value of approximately 6, the filtrate separated off after decomposition being used several times in the hydrothermal decomposition.

2. A method according to Claim 1, characterised in that the uncalcined pollucite and/or the calcined lepidolite are ground to a grain size of < 0.04 mm.

3. A method according to Claim 1 and/or 2, characterised in that the caesium- and rubidium-containing mineral is decomposed at 200°C with Ca(OH)₂.

4. A method according to one or more of Claims 1 to 3, characterised in that the caesium- and rubidium-containing mineral is decomposed over a period of one hour.

5. A method according to one or more of Claims 1 to 4, characterised in that the caesium- and rubidium-containing mineral is decomposed at a suspension density of 15% by weight.

6. A method according to Claims 1 to 5, characterised in that during the decomposition stirring is effected, in which case either a change in direction of rotation of the stirrer is effected at intervals or stirring is effected during decomposition at intervals over time.

7. A method according to Claims 1 to 6, characterised in that formic acid, acetic acid, citric acid, hydrochloric acid, hydrobromic acid or sulphuric acid is used as acid, or carbon monoxide, molybdenum trioxide or tungsten trioxide is used as acid anhydride.

8. A method according to one or more of Claims 1 to 7, characterised in that the filtrate separated off after decomposition is used up to 6 times in additional hydrothermal decomposition batches of the caesium- and rubidium-containing minerals.

9. A method according to one or more of Claims 1 to 8, characterised in that the carbonates separated off are used for producing lithium.

10. A method according to one or more of Claims 1 to 8, characterised in that the solids which are insoluble after the hydrothermal decomposition are used as aggregates for cement raw meal.

11. A method according to Claims 1 to 10, characterised in that the reduced, saturated caesium and rubidium salt solution is effected to a given density by mixing with the saturated solution of an alkali salt or alkaline earth salt, the anions of both salt solutions being the same.

12. A method according to Claim 11, characterised in that a saturated caesium and rubidium formiate solution is mixed with a saturated potassium formiate solution.

13. A method according to Claim 11, characterised in that a saturated caesium and rubidium bromide solution is mixed with a saturated calcium bromide solution.
